(19) Europäisches Patentamt
European Patent Office
Office européen des brevets

(11) **EP 2 349 921 B1**

(12) **EUROPEAN PATENT SPECIFICATION**

(45) Date of publication and mention of the grant of the patent:
**29.05.2013   Bulletin 2013/22**

(21) Application number: **09815680.5**

(22) Date of filing: **23.09.2009**

(51) Int Cl.:
*C01B 3/08* (2006.01)

(86) International application number:
**PCT/EP2009/062334**

(87) International publication number:
**WO 2010/034748 (01.04.2010 Gazette 2010/13)**

(54) **METAL-FUELED COGENERATION PLANT**

MIT METALL BETRIEBENE HEIZKRAFTANLAGE

INSTALLATION DE COGÉNÉRATION ALIMENTÉE PAR DU MÉTAL

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(30) Priority: **26.09.2008   IT MO20080249**

(43) Date of publication of application:
**03.08.2011   Bulletin 2011/31**

(73) Proprietor: **Universita' Degli Studi Di Modena E Reggio Emilia**
**41121 Modena (IT)**

(72) Inventors:
  • **MILANI, Massimo**
  **I-41100 Modena (IT)**
  • **MONTORSI, Luca**
  **I-41057 Spilamberto (IT)**
  • **FRANZONI, Federica**
  **I-42100 Reggio Emilia (IT)**

(74) Representative: **Modiano, Micaela Nadia**
**Modiano Gardi Patents SAS**
**Via Meravigli 16**
**20123 Milano (IT)**

(56) References cited:
**EP-A- 1 867 603     US-A- 5 143 047**
**US-B1- 6 506 360**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

### Technical Field

The present invention relates to a metal-fueled cogeneration plant.

### Background Art

It is known that in view of the growing energy demand, the energy generation sector is constantly seeking innovative sources that have a low environmental impact and do not entail problems in the supply of fuels.

In this field, a research that uses the reaction of oxidation in water of metal fuels to generate hydrogen designed to supply engines such as fuel cells has been developing for a long time, since hydrogen is a nonpolluting and renewable energy source. The metal fuels used to obtain this reaction are generally based on aluminum.

It is in fact known that pure aluminum in the solid/liquid state, in the presence of a water-based liquid oxidizer, develops, already in ambient conditions, an oxidation reaction that rapidly reaches the temperature conditions required to maintain the optimum reaction:

$$2Al + 3H_2O \rightarrow Al_2O_3 + 3H_2 \qquad (1)$$

According to the reaction of formula (1), also known as water splitting reaction, pure aluminum reacts with water to become gaseous hydrogen and alumina in the solid and liquid state; this reaction is accompanied by the generation of heat (approximately 230 kcal per mole of Al), being highly exothermic.

The difficulty in the industrial application of the reaction (1) consists in that upon contact with air aluminum oxidizes, and therefore aluminum articles become coated with a thin protective film that inhibits the reaction with water.

Various solutions have therefore been studied in order to render the aluminum inert with respect to air, in order to inhibit the formation of the oxide film, or to obtain the removal thereof directly in water, so as to allow the combustion reaction and the consequent formation of hydrogen.

For example, it is known from US 2008/0063597 A1 to obtain a fuel composed of a mixture in the solid state of aluminum and gallium, the latter acting as a protective agent with respect to aluminum oxidation.

During the oxidation reaction, the gallium, being inert with respect to water, undergoes no further transformations and remains as a waste product.

However, the use of this gallium- and aluminum-based fuel is not free from drawbacks, which include the fact that it requires production in suitable laboratory facilities and subsequent storage of fuel units, increasing time requirements and supply costs.

It is further necessary to provide systems for recovery and evacuation from the reaction chamber of the gallium that is released as a consequence of the oxidation of the fuel with water, which increase the complexity of its structure and increase its production and maintenance costs.

As an alternative, it is also known to provide chambers for the reaction of aluminum in water within which elements are provided for performing machining on articles based on aluminum or alloys thereof, which are fed into the chamber at such machining region, in order to eliminate the film of protective oxide that coats these articles and make pure aluminum atoms available for reaction with water.

In particular, a plant for the production of gaseous hydrogen is known from JP2001031401 which uses a vessel for containing water, which is connected to a duct for the extraction of the generated hydrogen, inside which a cutting tool is accommodated which is immersed in water and is designed to machine a fuel based on aluminum or alloys thereof, which is fed toward such tool. The rotary actuation of the cutting tool is obtained by means of a motor drive that is external to the vessel.

Moreover, US 2004/0208820 A1 discloses a method for generating hydrogen which entails providing a friction action and simultaneous mechanical fracture of a metallic material based on aluminum immersed in water, so as to make available atoms of pure aluminum to trigger the reaction with water. In particular, a plant is disclosed which is constituted by a reaction chamber provided with means for supplying water and with a duct for recovery of the gaseous hydrogen, which accommodates a grinding wheel immersed in water, toward which metallic material containing aluminum in the solid state is fed. The rotary motion of the grinding wheel is actuated by an external electric motor.

However, even these plants are not free from drawbacks, including in particular the fact that they are designed exclusively to obtain gaseous hydrogen to be stored or fed toward suitable users and do not allow to utilize the other energy sources made available as a consequence of the oxidation reaction.

Further, these plants require external supply sources both for the power or the fuel needed for the operation of the motor for the rotary actuation of the corresponding tools and for the process water required to maintain the reaction.

Moreover, such plants make it difficult to adjust the quantity of hydrogen that is produced and, with particular reference to the plant disclosed by JP2001031401, have discontinuous operation, since the reaction chamber must be resupplied with water periodically.

## Disclosure of the Invention

The aim of the present invention is to eliminate the above-mentioned drawbacks of the background art, by devising a metal-fueled cogeneration plant that allows to utilize not only the chemical potential energy of the hydrogen obtained from the oxidation of a metallic fuel in water but also the heat generated by the water splitting reaction to generate heat energy, mechanical energy and/or electric power.

Within this aim, an object of the present invention is to provide an autonomous plant with continuous-cycle operation that constitutes a substantially closed system capable of sustaining itself once steady-state conditions have been reached.

Another object of the present invention is to provide suitable treatments that allow to recycle the byproducts obtained in the reaction chamber and in particular the metallic oxides.

Another object of the present invention is to propose a compact plant that can be applied easily in various fields, for example for the propulsion of land, naval or aerospace vehicles, in stationary power plants, and for cogeneration for civil and/or industrial use.

A further object of the present invention is to not release substances that pollute the environment and to have a limited environmental impact.

Another object of the present invention is to provide a plant which is simple, relatively easy to provide in practice, safe in use, effective in operation, and of relatively low cost.

This aim and these and other objects which will become better apparent hereinafter are achieved by the present metal-fueled cogeneration plant, which comprises at least one reaction chamber, means for introducing at least one water-based liquid oxidizer, and means for supplying at least one metal-based fuel into said chamber, the oxidizer and the fuel being adapted to give rise to an exothermic oxidation reaction to obtain gaseous hydrogen and at least one metallic oxide, characterized in that said introduction means are adapted to introduce in said chamber a quantity of oxidizer that is substantially greater than the stoichiometric quantity to form steam and comprises at least one fluid-based motive power unit that is fed in input by at least said steam for the rotary actuation of a driving shaft, separation and recovery means for said steam being interposed between the chamber and the inlet to said motive power unit, and means for evacuation of said hydrogen being further provided.

## Brief Description of the drawings

Further characteristics and advantages of the present invention will become better apparent from the following detailed description of a preferred but not exclusive embodiment of a metal-fueled cogeneration plant, illustrated by way of non-limiting example in the accompanying drawings, wherein:

Figure 1 is a schematic longitudinal sectional view of a cogeneration plant according to the invention;
Figure 2 is a block diagram that represents the architecture and the functional connections of the cogeneration plant according to the invention;
Figure 3 is a block diagram that represents the management and control unit of the cogeneration plant according to the invention.

## Ways of carrying out the Invention

With reference to the figures, the reference numeral 1 generally designates a metal-fueled cogeneration plant.

The plant 1 comprises at least one reaction chamber 2, which is hermetic and suitably thermally insulated, means 3 for introducing at least one water-based liquid oxidizer into the chamber 2, and means 4 for supplying at least one metal-based fuel into said chamber.

The oxidizer and the fuel are adapted to generate between them an exothermic oxidation reaction to obtain gaseous hydrogen and at least one metallic oxide in the solid and/or liquid state.

Advantageously, the introduction means 3 and the supply means 4 work continuously, supplying the chamber 2 in order to stably maintain said reaction.

The fuel is preferably fed in the solid state, but it might also be introduced in the chamber 2 also or exclusively in the liquid state.

The fuel further comprises at least one metal selected from the group that comprises aluminum, magnesium, associated compounds and/or alloys. Preferably, the fuel is constituted by aluminum, compounds and/or alloys thereof.

The oxidizer is substantially constituted by water, optionally with the addition of protective, accelerating and/or catalytic substances of a known type.

The reaction between water and aluminum therefore gives rise to the formation of gaseous hydrogen and alumina in the solid and/or liquid state.

Advantageously, the introduction means 3 are adapted to introduce a quantity of water that is substantially greater than the stoichiometric one to maintain the oxidation reaction; the excess water, due to the heat generated by this reaction, is converted at least partially into steam.

The plant 1 therefore has at least one fluid-based motive power unit 5, which is fed in input by at least the steam to turn a driving shaft 6, between the chamber 2 and the inlet to the motive power unit 5 there being means 7 for separating and recovering at least the steam.

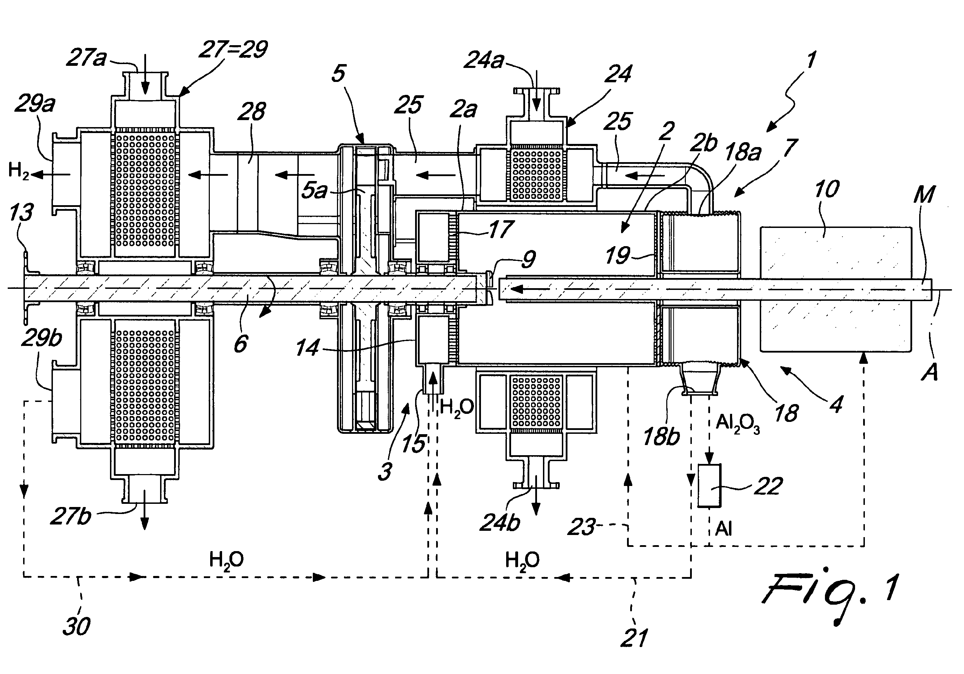

Preferably, as shown in Figure 1, the motive power unit 5 is fed in input both by the steam and by the hydrogen that are obtained in the chamber 2 and are removed from said chamber by way of the separation and recovery means 7.

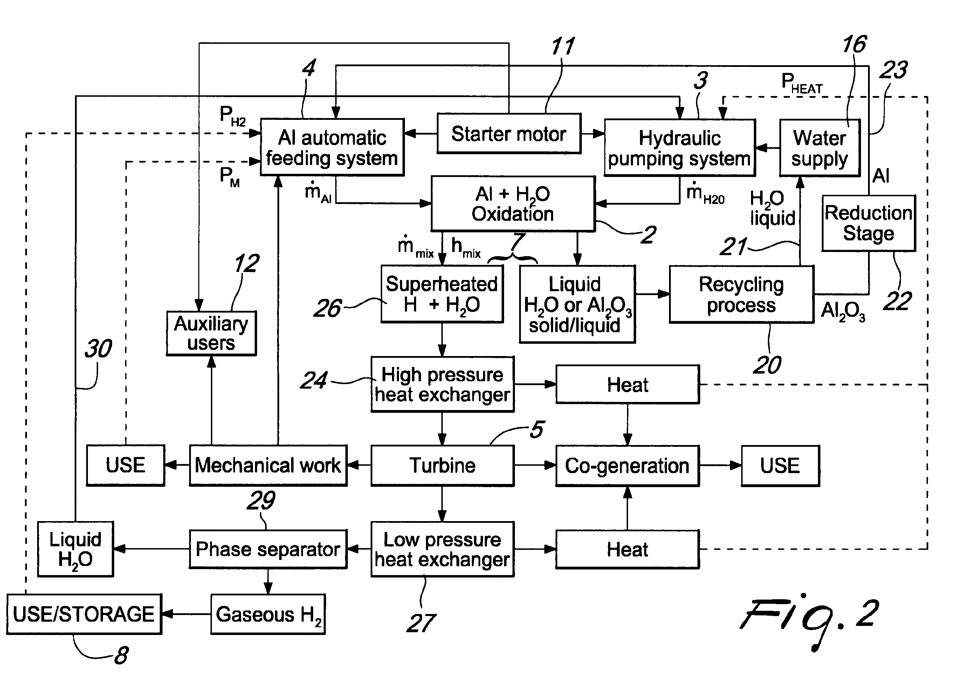

The plant 1 is further provided with means 8 (shown schematically in Figure 2) for evacuating the hydrogen obtained, which are associated with the separation and recovery means 7, if the motive power unit 5 is supplied exclusively by the steam, or arranged downstream of the discharge of the motive power unit 5, when said machine is supplied by both fluids. The evacuation means 8 can provide for the storage or conveyance of the hydrogen toward a user according to known technologies.

The motive power unit 5 is constituted by a turbine, the impeller 5a of which is jointly associated for rotation with the driving shaft 6. In an alternative embodiment, the motive power unit 5 can be constituted by an external-combustion prime mover, such as for example a Stirling engine.

The chamber 2 lies substantially along a longitudinal axis A, so as to form a first end 2a and a second end 2b, which are mutually opposite and are associated with a fluid connection with the introduction means 3 and the separation and recovery means 7 respectively.

The supply means 4 comprise at least one tool 9, which is accommodated in the chamber 2 so as to form a work area that is immersed in water and is associated with the driving shaft 6 for actuation with a cutting motion. In Figure 1, the tool 9 is of the type of a face mill and is keyed directly onto the driving shaft 6 at a first end that protrudes inside the chamber 2, the cutting motion being rotary. However, it is possible to provide for the use of a differently shaped tool, such as for example a grinding wheel. The supply means 4 further have pusher means 10 for introducing at least one article M made of fuel into the chamber 2 at said work area. The pusher means 10 preferably are adapted to supply the chamber 2 continuously. The mechanical action applied by the tool 9 to the article M is such as to obtain the formation of fragments of fuel of suitable size (for example having a diameter comprised between 10 and 100 micrometers), the exposed surfaces of which bear metallic particles that are reactive in the presence of water.

In particular, if aluminum-based fuel is used, the machining performed by the tool 9 allows to remove the film of alumina that coats the article M externally, which previously had remained in contact with air, and to make available particles of pure metal for reaction with water.

Advantageously, the article M can have an elongated shape and can be constituted by ordinary commercial bars, which are widely available commercially, the tool 9 being adapted to perform its end machining.

The tool 9 is arranged proximate to the first end 2a, at the longitudinal axis A, and the pusher means 9 are adapted to introduce the article M in the chamber 2 through an opening that is formed in the second end 2b parallel to said axis.

The plant 1 is provided with motor drive means 11 (schematically shown in Figure 2) for the initial actuation of the introduction means 3 and/or of the supply means 4. In particular, the motor drive means 11 are adapted to turn the driving shaft 6, producing the consequent triggering of the oxidation reaction in the chamber 2 until steady-state conditions are reached in which said motor drive means are deactivated and rotation is imparted to the driving shaft 6 exclusively by the turbine 5. Moreover, the motor drive means 11 ensure the starting of the operation of any pumping devices provided within the means 3 for introducing the oxidizer and of any additional auxiliary users 12, such as the elements for activating the pusher means 10.

Figure 1 illustrates a flange 13 that is rigidly connected to a second end of the driving shaft 6, which lies opposite the first one and is arranged externally with respect to the chamber 2, for mating with the motor drive means 11, not shown in detail, which can be constituted by an electric motor of a conventional type.

The introduction means 3 comprise a manifold body 14, which is associated with a duct 15 for the intake of water, which is fed by a tank 16 by way of said pumping devices or directly from the water mains; the manifold body 14 has a fluid connection to the first end 2a and has a substantially annular shape around the longitudinal axis A, so as to form a central hole in which the driving shaft 6 is accommodated so that it passes through. The chamber 2 has, on the first end 2a, an opening, at the central hole of the manifold body 14, in which the driving shaft 6 is inserted so as to pass hermetically. The introduction means 3 further have a straightening partition 17, which is interposed between the manifold body 14 and the first end 2a, in order to give the water a motion in a direction that is substantially parallel to the longitudinal axis A along the chamber 2, toward the second end 2b. The straightening partition 17 is constituted by an annular plate provided with a plurality of cylindrical through holes distributed along its entire extension.

The separation and recovery means 7 comprise a stilling basin 18, which is associated with a fluid connection with the second end 2b by interposition of a slowing partition 19, which is constituted by an annular plate provided with a plurality of cylindrical through holes distributed along its entire extension.

The basin 18 is provided, in an upper region, with at least one port 18a for the outflow of at least one between the hydrogen and the steam that have formed within the chamber 2 and, in a lower region, with at least one second port 18b for the outflow of at least one between any excess water that is still in the liquid state and the metallic oxide that has formed, in particular alumina. In the plant shown in Figure 1, the entire gaseous phase, constituted by a mixture of steam and hydrogen directed toward the turbine 5 passes through the first port 18a, whereas the water and alumina exit from the second port 18b. Downstream of the second port 18b, therefore, there is a first phase separation assembly 20, shown schematically in Figure 2, for the further separation of water and metal oxide, for example of the settling type. The plant 1 is further provided with first means 21 for transferring the water recovered by the first phase separation assembly 20 into the chamber 2 by way of the introduction means 3, and with a unit 22 for reducing the recovered metallic oxide and second means 23 for conveying the metal obtained from the reduction reaction in the chamber 2 directly or by way of the supply means 4.

In the case of use of fuel based on aluminum, alloys and/or compounds thereof, the alumina reduction unit 22 can be of the electrolytic type, preferably with cells having inert anodes.

The basin 18 therefore has a substantially annular extension around the longitudinal axis A, so as to form a central hole at which the opening is formed of the second end 2b for the hermetic introduction of the article M.

Advantageously, first heat exchange means 24 are provided which operate at high pressure (generally higher than 30 bar), for at least partial recovery of the heat from at least the steam in output from the first port 18a and in input to the turbine.

If the turbine 5 is supplied in input by steam and hydrogen, the first heat exchange means 24 process both fluids.

Figure 1 shows first heat exchange means 24 with separate fluids and isolated currents, which affect a duct 25 for connecting the first port 18a to the inlet of the turbine 5; the reference numerals 24a and 24b respectively designate the intake and discharge ports of a first working fluid that absorbs heat from the hydrogen and from the steam.

It is further possible to provide means 26 for superheating the hydrogen and/or the steam upstream of the inlet to the turbine, shown schematically in Figure 2. The superheating means 26, if provided, are suitably connected upstream of the inlet to the first heat exchange means 24. The superheating means 26 can be constituted for example by a portion of coiled duct arranged in the chamber 2 proximate to the work area of the tool 9 and to the region where the exothermic oxidation reaction is triggered and developed, which is crossed by the hydrogen and/or steam in output from the separation and recovery means 7.

The plant 1 further has second heat exchange means 27, which operate at low pressure (generally lower than five bars), associated with the outlet of the motive power unit 5 for the at least partial recovery of the heat from at least the steam and the corresponding condensation.

If the turbine 5 is fed in input by steam and hydrogen, the second heat exchange means 27 process both fluids.

In Figure 1, the second heat exchange means 27, with separated fluids and isolated currents, are connected to the outlet of the turbine 5 by means of a duct 28 and are supplied both with the hydrogen and with the steam; the reference numerals 27a and 27b designate respectively the inlet and the outlet of a second working fluid that absorbs heat from the hydrogen and from the steam.

There is, therefore, a second phase separation unit 29, which is associated so as to cooperate with the second heat exchange means 27 to separate the hydrogen from the water obtained from the condensation of the steam. In the figures, the reference numerals 29a and 29b designate the outlets respectively of hydrogen and condensation water.

The evacuation means 8 are associated with the discharge outlet 29a in order to store the hydrogen or send it to a user.

Finally, third means 30 for conveying the condensation water to the chamber 2 by way of the introduction means 3 are provided.

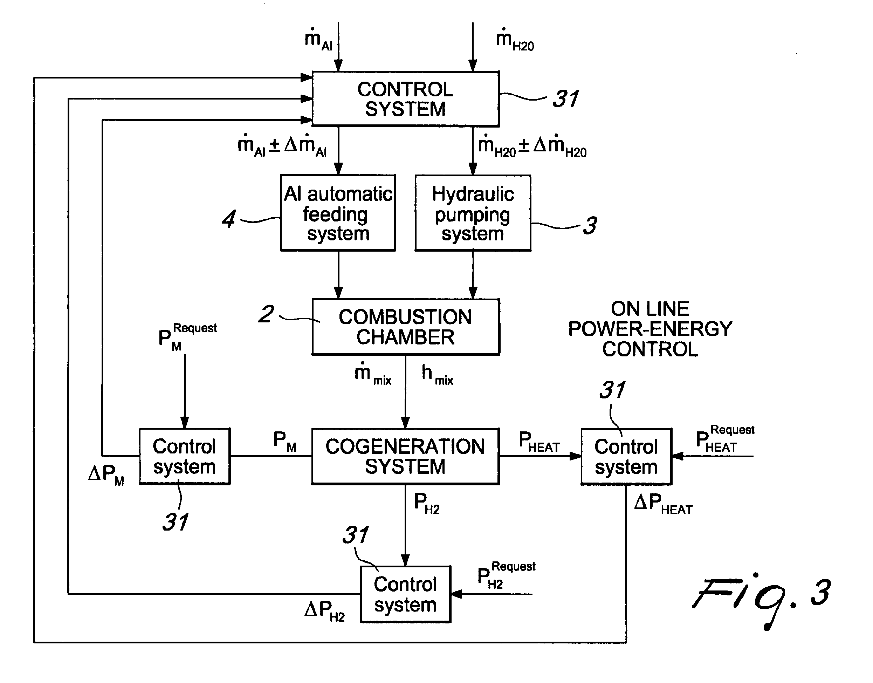

With particular reference to Figures 2 and 3, of which the symbols used are referenced in brackets, it is noted that advantageously there are means, constituted by conventional sensors and/or transducers, for detecting the physical quantities which allow, according to formulas that are known to the person skilled in the art, to calculate at least one among the values of thermal power ($P_{HEAT}$) transferred by the first and/or second heat exchange means 24 and/or 27, to the respective working fluids, mechanical power ($P_M$) made available by the motive power unit 5, and chemical potential energy ($P_{H2}$) that corresponds to the produced quantity of hydrogen.

In greater detail, it is possible to provide means for detecting the values of:

- flow-rate, pressure and temperature of the oxidizer fed by the introduction means 3,
- pressure and temperature in the chamber 2 at the region where the exothermic oxidation reaction is triggered and developed,
- pressure and temperature of the steam and/or hydrogen in input to the first heat exchange means 24,

- pressure and temperature of the steam and/or hydrogen in output from the first heat exchange means 24 or in input to the motive power unit 5,
- pressure and temperature of the steam and/or hydrogen in output from the motive power unit 5,
- flow-rate, pressure and temperature of the hydrogen in output from the first discharge port 29a and
- flow-rate, pressure and temperature of the condensation water in output from the second discharge port 29b.

It is further possible to provide means for detecting the values of:

- the feed rate of the article M transmitted by the pusher means 10,
- the rotation rate and torque of the driving shaft 6,
- flow-rate, pressure and temperature of the first working fluid in input to the first heat exchange means 24,
- pressure and temperature of the first working fluid in output from the first heat exchange means 24,
- flow-rate, pressure and temperature of the second working fluid in input to the second heat exchange means 27, and
- pressure and temperature of the second working fluid in output from the second heat exchange means 27.

The plant 1 is further provided with a management and control unit 31, which is shown schematically in Figure 3 and is adapted to receive the corresponding signals of the physical values, process them in order to calculate at least one of the above cited values of thermal power ($P_{HEAT}$), mechanical power ($P_M$) and chemical potential energy ($P_{H2}$) yielded by the plant 1 and to compare the detected values with corresponding set values of heat power $\left( P^{Requested}_{HEAT} \right)$, mechanical power $\left( P^{Requested}_{M} \right)$ and/or chemical potential energy $\left( P^{Requested}_{H2} \right)$ in order to determine any positive or negative variations ($\Delta P_{HEAT}$, $\Delta P_M$, $\Delta P_{H2}$) and accordingly manage the actuation of the introduction means 3 and/or of the feed means 4 so as to obtain detected values that are substantially equal to the set values.

In particular, if a variation of the detected value of thermal power ($\Delta P_{HEAT}$) with respect to the set value for a given flow-rate of water ($\dot{m}_{H2O}$) in input to the chamber 2 has been detected, the management and control unit 31 acts on the introduction means 3, setting a correlated positive or negative variation ( $\Delta \dot{m}_{H2O}$ )of the water flow-rate in input.

Moreover, in case of a variation of the detected value of mechanical power ($\Delta P_M$) or chemical potential energy ($\Delta P_{H2}$) with respect to the corresponding set value, for a given flow-rate of aluminum ( $\dot{m}_{Al}$) introduced in the chamber 2, the management and control unit 31 acts on the supply means 4, forcing a correlated positive or negative variation ( $\Delta \dot{m}_{Al}$) of the flow-rate of aluminum in input.

In particular, the value of the mechanical power ($P_M$) made available by the motive power unit 5 can be obtained by processing the pressure and temperature values of the flow-rate of gaseous mix ( $\dot{m}_{mix}$ ) in input to said motive power unit to calculate the corresponding enthalpy content ($h_{mix}$), from which the management and control unit 31 is capable of processing the datum related to the power that can be obtained from the motive power unit 5. At the same time, the management and control unit 31 is able to detect the mechanical power value required by the plant 1 from the values detected instantaneously of the torque and of the rotation rate at the driving shaft 6. When the mechanical power made available by the motive power unit 5 is sufficient to ensure that the driving shaft 6 continues to rotate at the desired speed and to cover the demand of the introduction means 3 and of any auxiliary users 12, the management and control unit 31 deactivates the motor drive means 11 and the plant 1 maintains itself autonomously. Any excess in the resulting mechanical power can be converted into electric power.

The management and control unit 31, not shown in detail, is of the type of a conventional electronic device, preferably of the programmable type, optionally provided with means for interfacing with the user to set the required values of thermal power $\left( P^{Requested}_{HEAT} \right)$, mechanical power $\left( P^{Requested}_{M} \right)$ and/or chemical potential energy $\left( P^{Requested}_{H2} \right)$.

The operation of the present invention is as follows.

By way of the introduction means 3 and the supply means 4, water or other water-based oxidizer and aluminum, compounds and/or alloys thereof or another metal-based fuel are introduced continuously respectively in the chamber 2, to trigger the oxidation reaction that leads to the generation of gaseous hydrogen and alumina or other metallic oxide.

Advantageously, the water is introduced continuously in the chamber 2 in a quantity that is greater than the stoichiometric quantity in order to maintain the oxidation reaction, so that the excess water is converted continuously at least partially into steam thanks to the heat generated by the oxidation reaction.

The steam and optionally also the hydrogen contained in the chamber 2, after suitable separation from the other substances contained in the chamber, are introduced in the turbine 5 or another fluid-based motive power unit in order to obtain mechanical power, which can optionally be converted into electric power. Before entering the turbine 5, the gaseous mix is preferably treated in superheating means 26, if provided, and in first heat exchange means 24 for heat recovery.

Any excess water and the alumina in output from the chamber 2 are treated in a first phase separation assembly 20, from which the water in output is sent in the chamber 2 and the alumina is reduced electrolytically so as to obtain again metallic aluminum to be introduced in the chamber 2.

In output from the turbine 5, the gaseous mix is treated in second heat exchange means 27 for the further recovery of heat and then in a second phase separation unit 29 for separating condensation water, which can be introduced again into the chamber 2, and the hydrogen intended for corresponding users or for storage.

The plant according to the invention therefore allows to obtain mechanical/electrical power, thermal power and chemical potential energy.

The method for cogeneration from metal fuel that is proposed in fact provides for the steps of:

- supplying at least one water-based liquid oxidizer,
- supplying at least one metal-based fuel that is reactive by oxidation to said oxidizer to form hydrogen and at least one metallic oxide, the oxidizer being supplied in excess with respect to the stoichiometric quantity required according to said oxidation reaction,

- mixing the fuel and the oxidizer to obtain the reaction and the simultaneous generation of steam from the excess quantity of the oxidizer,
- processing at least one between the hydrogen and the steam in a fluid-based motive power unit for the rotary actuation of at least one driving shaft,
- recovering the hydrogen in output from the working machine, such steps constituting a continuous process.

Such method can further provide for the step of recovering heat from the steam and/or hydrogen upstream or downstream of passage within the motive power unit.

In practice it has been found that the described invention achieves the proposed aim and objects and in particular the fact is stressed that the plant according to the invention and the corresponding cogeneration method allow to obtain, by utilizing a widely available metallic fuel, which is relatively cheap and nonpolluting, in addition to the chemical potential energy made available by the hydrogen obtained, also mechanical/electric and thermal power.

Further, the plant according to the invention allows to use at least part of the generated mechanical power to sustain its own operation, being autonomous in steady-state conditions with respect to external energy sources, which would increase its operating costs.

Moreover, the plant according to the invention provides for recycling of the reaction byproducts, reducing operating costs.

Finally, the proposed plant is compact and flexible in application.

The invention thus conceived is susceptible of numerous modifications and variations, all of which are within the scope of the appended claims.

In practice, the materials used, as well as the contingent shapes and dimensions, may be any according to requirements without thereby abandoning the scope of the protection of the appended claims.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

### Claims

1.   A metal-fueled cogeneration plant (1), comprising at least one reaction chamber (2), means (3) for introducing at least one water-based liquid oxidizer, and means (4) for supplying at least one metal-based fuel into said chamber (2), the oxidizer and the fuel being adapted to give rise to an exothermic oxidation reaction to obtain gaseous hydrogen and at least one metallic oxide, **characterized in that** said introduction means (3) are adapted to introduce in said chamber (2) a quantity of oxidizer that is substantially greater than the stoichiometric quantity to form steam and comprises at least one fluid-based motive power unit (5) that is fed in input by at least said steam for the rotary actuation of a driving shaft (6), separation and recovery means (7) for at least said steam being interposed between the chamber (2) and the inlet to said motive power unit (5), and means (8) for evacuation of said hydrogen being further provided.

**2.** The plant (1) according to claim 1, **characterized in that** said supply means (4) comprise at least one tool (9), which is accommodated within said chamber (2) so as to form a work area that is immersed in said oxidizer and is associated with said driving shaft (6) for actuation with a cutting motion and pusher means (10) for introducing at least one article (M) made of said fuel into said chamber (2) at said work area, the mechanical action of the tool (9) on the article (M) being adapted to obtain the formation of fragments of said fuel whose exposed surfaces bear metallic particles that are reactive to the oxidizer.

**3.** The plant (1) according to one or more of the preceding claims, **characterized in that** it comprises motor drive means (11) for the initial actuation of said introduction means (3) and/or of said supply means (4), in the steady state the actuation of the introduction means (3) and/or of the supply means (4) being sustained by the mechanical power provided by the motive power unit (5).

**4.** The plant (1) according to one or more of the preceding claims, **characterized in that** said chamber (2) lies substantially along a longitudinal axis (A) so as to define a first end (2a) and a second end (2b) which are mutually opposite and are associated with a fluid connection respectively with said introduction means (3) and with said separation and recovery means (7).

**5.** The plant (1) according to one or more of the preceding claims, **characterized in that** said introduction means (3) comprise a manifold body (14), which is associated with a duct (15) for the inflow of said oxidizer, with a fluid connection to said first end (2a) and having a substantially annular extension around said longitudinal axis (A), so as to define a central hole in which said driving shaft (6) is accommodated so as to pass through hermetically.

**6.** The plant (1) according to one or more of the preceding claims, **characterized in that** said introduction means (3) comprise a straightening partition (17), which is interposed between said manifold body (14) and said first end (2a), so as to give said oxidizer a motion in a direction that is substantially parallel to said longitudinal axis (A) along said chamber (2).

**7.** The plant (1) according to one or more of the preceding claims, **characterized in that** said introduction means (3) and said supply means (4) operate continuously.

**8.** The plant (1) according to one or more of the preceding claims, **characterized in that** said separation and recovery means (7) comprise a stilling basin (18), which is associated with a fluid connection with said second end (2b) by interposition of a slowing partition (19), the basin (18) being provided with at least one port (18a) for the outflow of at least one between said hydrogen and said steam, which is associated with the inlet of said motive power unit (5), and with at least one second port (18b) for the outflow of at least one between said excess oxidizer and said metallic oxide.

**9.** The plant (1) according to one or more of the preceding claims, **characterized in that** said tool (9) is arranged proximate to said first end (2a) at said longitudinal axis (A) and **in that** said pusher means (10) are adapted to introduce said article (M) parallel to said longitudinal axis (A).

**10.** The plant (1) according to one or more of the preceding claims, **characterized in that** said basin (18) has a substantially annular extension around said longitudinal axis (A) so as to form a central hole at which said chamber (2) is provided with an opening for the hermetic insertion of said article (M).

**11.** The plant (1) according to one or more of the preceding claims, **characterized in that** it comprises first heat exchange means (24) for the at least partial recovery of heat from at least said steam in output from said chamber (2).

**12.** The plant (1) according to one or more of the preceding claims, **characterized in that** it comprises means (26) for superheating at least said steam which are arranged upstream of the inlet into said motive power unit (5).

**13.** The plant (1) according to one or more of the preceding claims, **characterized in that** it comprises second heat exchange means (27) which are associated with the outlet of said motive power unit (5) for the at least partial recovery of heat from at least said steam.

**14.** The plant (1) according to one or more of the preceding claims, **characterized in that** it comprises a first phase separation assembly (20), which is associated with said second discharge port (18b) for the separation of said excess oxidizer and of said metallic oxide, first means (21) for conveying the oxidizer to the chamber (2), a unit (22) for reducing the metallic oxide and second means (23) for conveying the metal obtained from the reduction reaction to the chamber (2) being provided.

**15.** The plant (1) according to one or more of the preceding claims, **characterized in that** said motive power unit (5) is supplied in input by said steam and by said hydrogen, the separation and recovery means (7) being adapted to allow the removal from said chamber (2) of the steam and of the hydrogen and the evacuation means (8) being associated with the outlet of the motive power unit (5).

**16.** The plant (1) according to claim 14, **characterized in that** it comprises a second phase separation unit (29) which is associated so as to cooperate with said second heat exchange means (27) to separate said hydrogen from the water obtained from the condensation of said steam, the evacuation means (7) being associated with the output of said second separation assembly (29) and third means (30) being provided for returning the condensation water to the chamber (2).

**17.** The plant (1) according to one or more of the preceding claims, **characterized in that** said motive power unit (5) is constituted by a turbine, the impeller (5a) of which is jointly associated for rotation with said driving shaft (6).

**18.** The plant (1) according to one or more of claims 1 to 16, **characterized in that** said motive power unit (5) is constituted by an external-combustion prime mover.

**19.** The plant (1) according to one or more of the preceding claims, **characterized in that** said fuel comprises at least one metal selected from the group that comprises aluminum, magnesium, corresponding compounds and/or alloys.

**20.** The plant (1) according to claim 19, **characterized in that** said fuel is constituted substantially by aluminum, compounds and/or alloys thereof.

**21.** The plant (1) according to one or more of the preceding claims, **characterized in that** said article (M) has a substantially elongated shape, the tool (9) being adapted to work its end.

**22.** The plant (1) according to one or more of the preceding claims, **characterized in that** it comprises a management and control unit (31), which is adapted to process at least one among the values of thermal power ($P_{HEAT}$), mechanical power ($P_M$) and chemical potential energy ($P_{H2}$) obtained from the values of characteristic physical quantities measured by detection means, to compare said at least one detected value with at least one corresponding set value of thermal power $\left( P^{Requested}_{HEAT} \right)$, mechanical power $\left( P^{Requested}_{M} \right)$ or chemical potential energy $\left( P^{Requested}_{H2} \right)$ and to operate said introduction means (3) and/or said supply means (4) so as to obtain a detected value that is substantially equal to the corresponding set value.

**23.** A method for cogeneration from metallic fuel, which comprises the steps of:

- providing at least one water-based liquid oxidizer,
- supplying at least one metal-based fuel that is reactive by oxidation with said oxidizer in order to form hydrogen and at least one metallic oxide, the oxidizer being supplied in excess with respect to the stoichiometric quantity required according to said oxidation reaction,
- mixing said fuel and said oxidizer to obtain said reaction and the simultaneous generation of steam from the excess quantity of said oxidizer,
- treating at least one between said hydrogen and said steam in a fluid-based motive power unit for the rotary actuation of at least one driving shaft,
- recovering said hydrogen in output from said motive power unit (5), said steps constituting a continuous process.

**24.** The method according to claim 23, **characterized in that** it comprises the step of recovering heat from said at least one between said hydrogen and said steam upstream and/or downstream of the passage within said motive power unit (5).

**Patentansprüche**

1. Eine mit Metall betriebene Heizkraftanlage (1), die mindestens eine Reaktionskammer (2) umfasst, Mittel (3) zum Einführen mindestens eines flüssigen Oxidationsmittels auf Wasserbasis und Mittel (4) zur Zufuhr mindestens eines Brennstoffs auf Metallbasis in die Kammer (2), wobei das Oxidationsmittel und der Brennstoff geeignet sind, um eine exotherme Oxidationsreaktion einzuleiten, um gasförmigen Wasserstoff und mindestens ein Metalloxid zu gewinnen, **dadurch gekennzeichnet, dass** die Einführmittel (3) ausgebildet sind, um eine Menge an Oxidationsmittel in die Kammer (2) einzuführen, die wesentlich größer ist als die stöchiometrische Menge, um Dampf zu bilden, und mindestens eine Antriebseinheit (5) auf Fluidbasis umfassen, die eingangsseitig mindestens von dem Dampf gespeist wird, zur Drehbetätigung einer Antriebswelle (6), wobei Abtrenn- und Rückgewinnungsmittel (7) mindestens für den Dampf zwischen der Kammer (2) und dem Einlass zu der Antriebseinheit (5) angeordnet sind, und wobei weiter Mittel (8) zum Entleeren des Wasserstoffs bereitgestellt sind.

2. Die Anlage (1) gemäß Anspruch 1, **dadurch gekennzeichnet, dass** die Zufuhrmittel (4) mindestens ein Werkzeug (9) umfassen, das innerhalb der Kammer (2) angeordnet ist, um so einen Arbeitsbereich zu bilden, der in das Oxidationsmittel eingetaucht ist und zur Betätigung mit einer Schneidbewegung mit der Antriebswelle (6) verknüpft ist, und Schubmittel (10) zum Einführen mindestens eines Gegenstands (M), der aus dem Treibstoff besteht, in die Kammer (2) an dem Arbeitsbereich, wobei die mechanische Wirkung des Werkzeugs (9) auf den Gegenstand (M) geeignet ist, um die Bildung von Fragmenten des Brennstoffs zu erreichen, deren freiliegende Oberflächen Metallpartikel tragen, die mit dem Oxidationsmittel reagieren.

3. Die Anlage (1) gemäß einem oder mehreren der obigen Ansprüche, **dadurch gekennzeichnet, dass** sie Motorantriebsmittel (11) für die Ausgangsbetätigung der Einführmittel (3) und/oder der Zufuhrmittel (4) umfasst, wobei im stabilen Zustand die Betätigung der Einführmittel (3) und/oder der Zufuhrmittel (4) von der mechanischen Leistung aufrechterhalten wird, die von der Antriebseinheit (5) geliefert wird.

4. Die Anlage (1) gemäß einem oder mehreren der obigen Ansprüche, **dadurch gekennzeichnet, dass** die Kammer (2) im Wesentlichen entlang einer Längsachse (A) liegt, um so ein erstes Ende (2a) und ein zweites Ende (2b) zu bestimmen, die einander gegenüberliegen und mit einer Fluidverbindung mit den Einführmitteln (3) beziehungsweise mit den Abtrenn- und Rückgewinnungsmitteln (7) verknüpft sind.

5. Die Anlage (1) gemäß einem oder mehreren der obigen Ansprüche, **dadurch gekennzeichnet, dass** die Einführmittel (3) einen Sammelrohr-Körper (14) umfassen, der mit einer Leitung (15) für den Einlass des Oxidationsmittels verknüpft ist, mit einer Fluidverbindung zu dem ersten Ende (2a) und mit einer im Wesentlichen ringförmigen Ausdehnung um die Längsachse (A) herum, um so ein zentrales Loch zu bestimmen, in welchem die Antriebswelle (6) aufgenommen wird, um dort hermetisch hindurchzugehen.

6. Die Anlage (1) gemäß einem oder mehreren der obigen Ansprüche, **dadurch gekennzeichnet, dass** die Einführmittel (3) einen Begradigungsabschnitt (17) umfassen, der zwischen dem Sammelrohr-Körper (14) und dem ersten Ende (2a) angeordnet ist, um so dem Oxidationsmittel eine Bewegung in eine Richtung zu verleihen, die im Wesentlichen parallel zu der Längsachse (A) entlang der Kammer (2) ist.

7. Die Anlage (1) gemäß einem oder mehreren der obigen Ansprüche, **dadurch gekennzeichnet, dass** die Einführmittel (3) und die Zufuhrmittel (4) kontinuierlich arbeiten.

8. Die Anlage (1) gemäß einem oder mehreren der obigen Ansprüche, **dadurch gekennzeichnet, dass** die Abtrenn- und Rückgewinnungsmittel (7) eine Beruhigungskammer (18) umfassen, die durch Anordnung einer Verlangsamungs-Trennwand (19) dazwischen mit einer Fluidverbindung mit dem zweiten Ende (2b) verknüpft ist, wobei die Kammer (18) mit mindestens einer Öffnung (18a) für das Ausströmen des Wasserstoffs und/oder des Dampfs versehen ist, die mit dem Einlass der Antriebseinheit (5) verknüpft ist, und mit mindestens einer zweiten Öffnung (18b) für das Ausströmen des überschüssigen Oxidationsmittels und / oder des Metalloxids.

9. Die Anlage (1) gemäß einem oder mehreren der obigen Ansprüche, **dadurch gekennzeichnet, dass** das Werkzeug (9) nahe dem ersten Ende (2a) an der Längsachse (A) angeordnet ist, und dadurch, dass die Schubmittel (10) ausgebildet sind, um den Gegenstand (M) parallel zu der Längsachse (A) einzuführen.

10. Die Anlage (1) gemäß einem oder mehreren der obigen Ansprüche, **dadurch gekennzeichnet, dass** die Kammer (18) eine im Wesentlichen ringförmige Ausdehnung um die Längsachse (A) herum hat, um so ein zentrales Loch zu bilden, an dem die Kammer (2) mit einer Öffnung für das hermetische Einsetzen des Gegenstands (M) versehen ist.

11. Die Anlage (1) gemäß einem oder mehreren der obigen Ansprüche, **dadurch gekennzeichnet, dass** sie erste Wärmeaustauschmittel (24) für die zumindest partielle Rückgewinnung von Wärme mindestens von dem Dampf, der aus der Kammer (2) ausströmt, umfasst.

12. Die Anlage (1) gemäß einem oder mehreren der obigen Ansprüche, **dadurch gekennzeichnet, dass** sie Mittel (26) zur Überhitzung mindestens des Dampfs umfasst, die stromaufwärts von dem Einlass in die Antriebseinheit (5) angeordnet sind.

13. Die Anlage (1) gemäß einem oder mehreren der obigen Ansprüche, **dadurch gekennzeichnet, dass** sie zweite Wärmeaustauschmittel (27) umfasst, die mit dem Auslass der Antriebseinheit (5) für die zumindest partielle Rückgewinnung von Wärme mindestens aus dem Dampf verknüpft sind.

14. Die Anlage (1) gemäß einem oder mehreren der obigen Ansprüche, **dadurch gekennzeichnet, dass** sie einen ersten Phasentrennungsaufbau (20) umfasst, der für die Trennung des überschüssigen Oxidationsmittels und des Metalloxids mit der zweiten Auslassöffnung (18b) verknüpft ist, wobei erste Mittel (21) zur Beförderung des Oxidationsmittels an die Kammer (2), eine Einheit (22) zur Reduktion des Metalloxids und zweite Mittel (23) zur Beförderung des Metalls,' das aus der Reduktionsreaktion gewonnen wird, an die Kammer (2) bereitgestellt sind.

15. Die Anlage (1) gemäß einem oder mehreren der obigen Ansprüche, **dadurch gekennzeichnet, dass** die Antriebseinheit (5) von dem Dampf und von dem Wasserstoff eingangsseitig gespeist wird, wobei die Abtrenn- und Rückgewinnungsmittel (7) ausgebildet sind, um das Entfernen des Dampfs und des Wasserstoffs aus der Kammer (2) zu ermöglichen, und wobei das Ablassmittel (8) mit dem Auslass der Antriebseinheit (5) verknüpft ist.

16. Die Anlage (1) gemäß Anspruch 14, **dadurch gekennzeichnet, dass** sie eine zweite Phasentrennungseinheit (29) umfasst, die zum Zusammenwirken mit den zweiten Wärmeaustauschmitteln (27) verknüpft ist, um den Wasserstoff von dem Wasser, das aus der Kondensation des Dampfs gewonnen wurde, zu trennen, wobei die Entleerungsmittel (7) mit dem Ausgang der zweiten Phasentrennungseinheit (29) verknüpft sind und dritte Mittel (30) bereitgestellt sind, um das Kondensationswasser zur Kammer (2) zurückzuführen.

17. Die Anlage (1) gemäß einem oder mehreren der obigen Ansprüche, **dadurch gekennzeichnet, dass** die Antriebseinheit (5) aus einer Turbine besteht, deren Flügelrad (5a) zur Drehung fest mit der Antriebswelle (6) verbunden ist.

18. Die Anlage (1) gemäß einem oder mehreren der Ansprüche 1 bis 16, **dadurch gekennzeichnet, dass** die Antriebseinheit (5) in einer Kraftmaschine mit äußerer Verbrennung besteht.

19. Die Anlage (1) gemäß einem oder mehreren der obigen Ansprüche, **dadurch gekennzeichnet, dass** der Brennstoff mindestens ein Metall umfasst, gewählt aus der Gruppe, die Aluminium, Magnesium, entsprechende Verbindungen und / oder Legierungen umfasst.

20. Die Anlage (1) gemäß Anspruch 19, **dadurch gekennzeichnet, dass** der Brennstoff im Wesentlichen aus Aluminium, Verbindungen und / oder Legierungen davon besteht.

21. Die Anlage (1) gemäß einem oder mehreren der obigen Ansprüche, **dadurch gekennzeichnet, dass** der Gegenstand (M) eine im Wesentlichen verlängerte Form hat, wobei das Werkzeug (9) ausgebildet ist, um an seinem Ende zu arbeiten.

22. Die Anlage (1) gemäß einem oder mehreren der obigen Ansprüche, **dadurch gekennzeichnet, dass** sie eine Verwaltungs- und Steuereinheit (31) umfasst, die ausgebildet ist, um mindestens einen der folgenden Werte zu verarbeiten: thermische Leistung ($P_{HEAT}$), mechanische Leistung ($P_M$) und chemische potentielle Energie ($P_{H2}$), die aus den Werten charakteristischer physikalischer Größen gewonnen werden, die von Erfassungsmitteln gemessen werden, zum Vergleich des mindestens einen Istwerts mit mindestens einem entsprechenden Sollwert der thermischen Leistung $\left( P_{HEAT}^{Requested} \right)$ der mechanischen Leistung $\left( P_{M}^{Requested} \right)$,

oder chemischer potentieller Energie $\left( P_{H2}^{Requested} \right)$ und um die Einführmittel (3) und / oder die Zufuhrmittel (4) so zu betätigen, dass ein Istwert erhalten wird, der im Wesentlichen gleich dem entsprechenden Sollwert ist.

23. Ein Verfahren zur Kraft-Wärme-Kopplung aus metallischem Brennstoff, das folgende Schritte umfasst:

- Bereitstellung mindestens eines flüssigen Oxidationsmittels auf Wasserbasis,
- Bereitstellung mindestens eines Brennstoffs auf Metallbasis, der durch Oxidierung mit dem Oxidationsmittel reaktiv ist, um Wasserstoff und mindestens ein Metalloxid zu bilden, wobei das Oxidationsmittel in Überschuss im Verhältnis zu der stöchiometrischen Menge bereitgestellt wird, die entsprechend der Oxidationsreaktion erforderlich ist,
- Mischen des Brennstoffs und des Oxidationsmittels, um die Reaktion und die gleichzeitige Erzeugung von Dampf aus der überschüssigen Menge des Oxidationsmittels zu erhalten,
- Behandlung des Wasserstoffs und / oder des Dampfs in einer Antriebseinheit auf Fluidbasis zur Drehbetätigung mindestens einer Antriebswelle,
- Rückgewinnung des Wasserstoffs, der von der Antriebseinheit (5) abgegeben wird,
wobei die Schritte einen kontinuierlichen Prozess darstellen.

24. Das Verfahren gemäß Anspruch 23, **dadurch gekennzeichnet, dass** es den Schritt der Rückgewinnung von Wärme aus dem Wasserstoff und / oder dem Dampf stromaufwärts und / oder stromabwärts von der Passage innerhalb der Antriebseinheit (5) umfasst.

**Revendications**

1. Installation de cogénération alimentée par du métal (1), comprenant au moins une chambre de réaction (2), des moyens (3) pour introduire au moins un oxydant liquide à base d'eau, et des moyens (4) pour amener au moins un combustible à base de métal dans ladite chambre (2), l'oxydant et le combustible étant adaptés pour donner lieu à une réaction d'oxydation exothermique afin d'obtenir de l'hydrogène gazeux et au moins un oxyde métallique, **caractérisée en ce que** lesdits moyens d'introduction (3) sont adaptés pour introduire, dans ladite chambre (2), une quantité d'oxydant qui est sensiblement supérieure à la quantité stoechiométrique afin de former de la vapeur et comprend au moins une unité de puissance motrice à base de fluide (5) qui est alimentée dans l'entrée par au moins ladite vapeur pour l'actionnement rotatif d'un arbre d'entraînement (6), des moyens de séparation et de récupération (7) pour au moins ladite vapeur étant intercalés entre la chambre (2) et l'entrée dans ladite unité de puissance motrice (5), et des moyens (8) pour l'évacuation dudit hydrogène étant en outre prévus.

2. Installation (1) selon la revendication 1, **caractérisée en ce que** lesdits moyens d'alimentation (4) comprennent au moins un outil (9), qui est logé l'intérieur de ladite chambre (2) afin de former une zone de travail qui est immergée dans ledit oxydant et est associé audit arbre d'entraînement (6) pour l'actionnement avec un mouvement de coupe et des moyens de poussoir (10) pour l'introduction d'au moins un article (M) réalisé à partir dudit combustible dans ladite chambre (2) au niveau de ladite zone de travail, l'action mécanique de l'outil (9) sur l'article (M) étant adaptée pour obtenir la formation de fragments dudit combustible dont les surfaces exposées portent des particules métalliques qui réagissent avec l'oxydant.

3. Installation (1) selon l'une ou plusieurs des revendications précédentes, **caractérisée en ce qu'**elle comprend des moyens d'entraînement par moteur (11) pour l'actionnement initial desdits moyens d'introduction (3) et/ou desdits moyens d'alimentation (4), à l'état stable, l'actionnement des moyens d'introduction (3) et/ou des moyens d'alimentation (4) étant soutenu par la puissance mécanique fournie par l'unité de puissance motrice (5).

4. Installation (1) selon une ou plusieurs des revendications précédentes, **caractérisée en ce que** ladite chambre (2) se trouve sensiblement le long d'un axe longitudinal (A) afin de définir une première extrémité (2a) et une seconde extrémité (2b) qui sont mutuellement opposées et sont associées à un raccordement de fluide respectivement avec lesdits moyens d'introduction (3) et avec lesdits moyens de séparation et de récupération (7).

**5.** Installation (1) selon une ou plusieurs des revendications précédentes, **caractérisée en ce que** lesdits moyens d'introduction (3) comprennent un corps de collecteur (14) qui est associé à un conduit (15) pour l'entrée desdits oxydants, avec un raccordement de fluide à ladite première extrémité (2a) et ayant une extension sensiblement annulaire autour dudit axe longitudinal (A), pour définir un trou central dans lequel ledit arbre d'entraînement (6) est logé afin de passer à travers hermétiquement.

**6.** Installation (1) selon une ou plusieurs des revendications précédentes, **caractérisée en ce que** lesdits moyens d'introduction (3) comprennent une séparation de redressement (17) qui est intercalée entre ledit corps de collecteur (14) et ladite première extrémité (2a), afin de donner audit oxydant un mouvement dans une direction qui est sensiblement parallèle audit axe longitudinal (A) le long de ladite chambre (2).

**7.** Installation (1) selon une ou plusieurs des revendications précédentes, **caractérisée en ce que** lesdits moyens d'introduction (3) et lesdits moyens d'alimentation (4) fonctionnent de manière continue.

**8.** Installation (1) selon une ou plusieurs des revendications précédentes, **caractérisée en ce que** lesdits moyens de séparation et de récupération (7) comprennent un bassin de tranquillisation (18) qui est associé à un raccordement de fluide avec ladite seconde extrémité (2b) par l'interposition d'une séparation de ralentissement (19), le bassin (18) étant doté d'au moins un orifice (18a) pour la sortie d'au moins l'un parmi ledit hydrogène et ladite vapeur, qui est associé à l'entrée de ladite unité de puissance motrice (5), et d'au moins un second orifice (18b) pour la sortie d'au moins l'un parmi ledit oxydant excédentaire et ledit oxyde métallique.

**9.** Installation (1) selon une ou plusieurs des revendications précédentes, **caractérisée en ce que** ledit outil (9) est agencé à proximité de ladite première extrémité (2a) au niveau dudit axe longitudinal (A) et **en ce que** lesdits moyens de poussoir (10) sont adaptés pour introduire ledit article (M) parallèlement audit axe longitudinal (A).

**10.** Installation (1) selon une ou plusieurs des revendications précédentes, **caractérisée en ce que** ledit bassin (18) a une extension sensiblement annulaire autour dudit axe longitudinal (A) afin de former un trou central au niveau duquel ladite chambre (2) est prévue avec une ouverture pour l'insertion hermétique dudit article (M).

**11.** Installation (1) selon une ou plusieurs des revendications précédentes, **caractérisée en ce qu'**elle comprend des premiers moyens d'échange de chaleur (24) pour la récupération au moins partielle de la chaleur provenant au moins de ladite vapeur en sortie de ladite chambre (2).

**12.** Installation (1) selon une ou plusieurs des revendications précédentes, **caractérisée en ce qu'**elle comprend des moyens (26) pour surchauffer au moins ladite vapeur, qui sont agencés en amont de ladite entrée dans ladite unité de puissance motrice (5).

**13.** Installation (1) selon une ou plusieurs des revendications précédentes, **caractérisée en ce qu'**elle comprend des deuxièmes moyens d'échange de chaleur (27) qui sont associés à la sortie de ladite unité de puissance motrice (5) pour la récupération au moins partielle de la chaleur provenant au moins de ladite vapeur.

**14.** Installation (1) selon une ou plusieurs des revendications précédentes, **caractérisée en ce qu'**elle comprend un premier ensemble de séparation de phase (20), qui est associé audit second orifice de décharge (18b) pour la séparation dudit oxydant excédentaire et dudit oxyde métallique, des premiers moyens (21) pour transporter l'oxydant vers la chambre (2), une unité (22) pour réduire l'oxyde métallique et des deuxièmes moyens (23) pour transporter le métal obtenu par la réaction de réduction jusqu'à la chambre (2), étant prévus.

**15.** Installation (1) selon une ou plusieurs des revendications précédentes, **caractérisée en ce que** l'unité de puissance motrice (5) est fournie, en entrée, par ladite vapeur et par ledit oxygène, les moyens de séparation et de récupération (7) étant adaptés pour permettre le retrait de ladite chambre (2) de la vapeur et de l'hydrogène et les moyens d'évacuation (8) étant associés à la sortie de l'unité de puissance motrice (5).

**16.** Installation (1) selon la revendication 14, **caractérisée en ce qu'**elle comprend une seconde unité de séparation de phase (29) qui est associée pour coopérer avec lesdits deuxièmes moyens d'échange de chaleur (27) afin de séparer ledit hydrogène de l'eau obtenu par la condensation de ladite vapeur, les moyens d'évacuation (7) étant associés à la sortie dudit second ensemble de séparation (29) et des troisièmes moyens (30) étant prévus pour ramener l'eau de condensation vers la chambre (2).

**17.** Installation (1) selon une ou plusieurs des revendications précédentes, **caractérisée en ce que** ladite unité de puissance motrice (5) est constituée par une turbine, dont la roue (5a) est associée conjointement pour la rotation avec ledit arbre d'entraînement (6).

**18.** Installation (1) selon une ou plusieurs des revendications 1 à 16, **caractérisée en ce que** ladite unité de puissance motrice (5) est constituée par un moteur principal à combustion externe.

**19.** Installation (1) selon une ou plusieurs des revendications précédentes, **caractérisée en ce que** ledit combustible comprend au moins un métal choisi dans le groupe comprenant l'aluminium, le magnésium, les composés et/ou alliages correspondants.

**20.** Installation (1) selon la revendication 19, **caractérisée en ce que** ledit combustible est sensiblement composé par l'aluminium, ses composés et/ou alliages.

**21.** Installation (1) selon une ou plusieurs des revendications précédentes, **caractérisée en ce que** ledit article (M) a une forme sensiblement allongée, l'outil (9) étant adapté pour usiner son extrémité.

**22.** Installation (1) selon une ou plusieurs des revendications précédentes, **caractérisée en ce qu'**elle comprend une unité de gestion et de commande (31) qui est adaptée pour traiter au moins l'une parmi les valeurs de puissance thermique ($P_{HEAT}$), la puissance mécanique ($P_M$) et l'énergie potentielle chimique ($P_{H2}$) obtenues à partir des valeurs des quantités physiques caractéristiques mesurées par les moyens de détection, pour comparer ladite au moins une valeur détectée avec au moins une valeur de consigne correspondante de puissance thermique $\left(P_{HEAT}^{Requested}\right)$, de puissance mécanique $\left(P_M^{Requested}\right)$ ou de l'énergie potentielle chimique $\left(P_{H2}^{Requested}\right)$ et pour faire fonctionner lesdits moyens d'introduction (3) et/ou lesdits moyens d'alimentation (4) afin d'obtenir une valeur détectée qui est sensiblement égale à la valeur de consigne correspondante.

**23.** Procédé de cogénération à partir d'un combustible métallique, qui comprend les étapes consistant à :

prévoir au moins un oxydant liquide à base d'eau,
fournir au moins un combustible à base de métal qui réagit par oxydation avec ledit oxydant afin de former de l'hydrogène et au moins un oxyde métallique, l'oxydant étant alimenté en excès par rapport à la quantité stoechiométrique requise selon ladite réaction d'oxydation,
mélanger ledit combustible et ledit oxydant afin d'obtenir ladite réaction et la génération simultanée de vapeur à partir de la quantité excédentaire dudit oxydant,
traiter au moins l'un parmi ledit hydrogène et ladite vapeur dans une unité de puissance motrice à base de fluide pour l'actionnement rotatif d'au moins un arbre d'entraînement,
récupérer ledit hydrogène, en sortie, de ladite unité de puissance motrice (5), lesdites étapes constituant un procédé continu.

**24.** Procédé selon la revendication 23, **caractérisé en ce qu'**il comprend l'étape consistant à récupérer la chaleur dudit au moins un parmi ledit hydrogène et ladite vapeur en amont et/ou en aval du passage dans ladite unité de puissance motrice (5).

Fig. 1

Fig. 2

Fig. 3

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20080063597 A1
- JP 2001031401 B
- US 20040208820 A1